# EUROPÄISCHE PATENTSCHRIFT

(11) **EP 2 956 326 B1**
(45) Veröffentlichungstag und Bekanntmachung des Hinweises auf die Patenterteilung: **16.08.2017**
(21) Anmeldenummer: 14704104.0
(22) Anmeldetag: 05.02.2014
(51) Int. Cl.: B60K 11/04, F28F 9/00

(54) **KÜHLEINRICHTUNG FÜR EIN KRAFTFAHRZEUG**
COOLING DEVICE FOR A MOTOR VEHICLE
DISPOSITIF DE REFROIDISSEMENT DESTINÉ À UN VÉHICULE AUTOMOBILE

(30) Priorität: 16.02.2013 DE 102013002707; 04.02.2014 DE 102014201991
(43) Veröffentlichungstag der Anmeldung: 23.12.2015
(73) Patentinhaber: Volkswagen Aktiengesellschaft, 38440 Wolfsburg (DE)
(72) Erfinder: ROHR, Michael, 38446 Wolfsburg (DE)
(86) Internationale Anmeldenummer: PCT/EP2014/052194
(87) Internationale Veröffentlichungsnummer: WO 2014/124847

(56) Entgegenhaltungen:
- EP-A1- 0 747 650
- EP-A1- 2 642 235
- WO-A1-2005/073654
- WO-A1-2011/085750
- DE-U1-202009 011 439
- US-B1- 6 273 182

## Beschreibung

Die Erfindung betrifft eine Kühleinrichtung für ein Kraftfahrzeug, wobei die Kühleinrichtung zumindest zwei Kühlelemente umfasst, die in verschiedenen, insbesondere parallelen Ebenen nacheinander von der zugeführten Umgebungsluft durchströmbar angeordnet und mittels Steckverbindungen miteinander verbunden sind, wobei zumindest eine erste Steckverbindung in eine erste Richtung und zumindest eine zweite Steckverbindung in eine zweite Richtung quer zu der ersten Richtung beweglich ausgeführt ist und die zumindest eine der ersten Steckverbindungen in ihrer die Kühlelemente verbindenden Fixierposition jeweils in der Ebene parallel zu den Kühlelementen in zumindest eine Richtung eingeschränkt beweglich ausgeführt ist, wobei die zumindest eine erste Steckverbindung eine Loslagerseite bildend an einer ersten Kante, insbesondere an einer ersten Sammeleinrichtung der Kühlelemente angeordnet ist und die zumindest eine zweite Steckverbindung eine Festlagerseite bildend an einer der ersten Kante gegenüberliegenden zweiten Kante, insbesondere einer zweiten Sammeleinrichtung (9) angeordnet ist.

Ein Niedertemperaturkühler, auch Nebenkühler genannt, dient bei modernen Verbrennungsmotoren zur Rückkühlung des zur Abkühlung des Motors verwendeten Wassers. Ein Niedertemperaturkühler wird häufig anstatt eines Ladeluftkühlers eingesetzt. Insbesondere wird ein Niedertemperaturkühler zur Kühlung von Nebenaggregaten beispielsweise von Turboladern, Generatoren, Elektroantrieben oder einem separaten am Motor angeordneten Ladeluftkühler verwendet.

Demgegenüber dienen Hochtemperaturkühler, welche auch als Hauptwasserkühler bezeichnet werden, der Kühlung des Brennraums, des Zylinders und des Zylinderkopfs. Verbreitet ist auch die Kühlung des Motoröls beziehungsweise des Getriebeöls mit dem Hochtemperaturkühler.

Ladeluftkühler werden als Zusatzaggregate in Verbrennungskraftmaschinen eingesetzt und dienen dem Abkühlen von in diese einzuspeisender, bereits vorverdichteter Luft zum Zwecke einer weiteren Verdichtung und damit einer Steigerung der Ausgangsleistung der Verbrennungskraftmaschinen. Dazu weist der einen Wärmetauscher darstellende Ladeluftkühler einen Kühlerblock mit einem Röhrensystem auf, das von einem Kühlmedium durchströmt wird. Zur Verbesserung des Wärmeaustauschs ist das Röhrensystem mit Rippen oder Lamellen versehen.

Der Hochtemperaturkühler und der Niedertemperaturkühler sind Wärmetauscher, die in Fahrtrichtung eines Fahrzeugs, in dessen vorderen Bereich, dem Fahrtluftstrom ausgesetzt angeordnet sind. Vorzugsweise ist in Fahrtrichtung vor dem Hochtemperaturkühler und dem Niedertemperaturkühler ein Ventilator angeordnet, welcher bei Bedarf auch bei Stillstand des Fahrzeugs den Hochtemperaturkühler und den Niedertemperaturkühler einem Luftstrom aussetzt. Hochtemperaturkühler und/oder Niedertemperaturkühler und/oder Ventilator bilden zusammen einen Kühlerblock. Als Befestigungsmittel untereinander sind an dem Kühlerblock Befestigungsflansche oder Befestigungsschienen ausgebildet, an denen die einzelnen Elemente mit gegebenenfalls ebenso besonders ausgebildeten Schrauben oder Bolzen befestigt sind. Dazu sind in den Befestigungsflanschen oder Befestigungsschienen gegebenenfalls speziell ausgebildete Schraubenmuttern eingesetzt.

Aus der DE 43 32 919 A1, die ein Kühlelement mit einem daran befestigten weiteren Kühlelement zum Gegenstand hat, ist eine Befestigungsanordnung mit Befestigungsmitteln bekannt, welche an einem der Kühlelemente jeweils aus einer in einer Führung mit einer elastischen Auskleidung formschlüssig anliegenden selbstsichernden Schraube und einer an der Schmalseite eines anderen der Kühlelemente ausgebildeten Öffnung für diese Schraube gebildet ist. Der Rand der Öffnung ist von der Schraube hintergreifbar. Die Befestigung erfolgt durch Einstecken derselben von oben in den Ladeluftkühler und Arretierung durch im unteren Bereich angeordnete Arretierungselemente und anschließendes Einschrauben der Schrauben in die Öffnungen.

Die Anordnung oder Ausbildung von Befestigungsmitteln am Kühlerblock für ein diesen umgebendes Kühlluftgehäuse oder eine Kühlluftzuführungshaube ist hinsichtlich des Erstellungsaufwands infolge von Metallbearbeitungsvorgängen, aber auch hinsichtlich der Montage und einer Demontage relativ aufwendig.

Weiterhin beschreibt die DE 196 45 507 A1 eine Befestigungsanordnung für eine Luftführungshaube an einem Ladeluftkühler, der zwei einander gegenüberliegend an einem quaderförmigen Kühlerblock angeordnete Luftleitkästen für den Ladelufteintritt und den Ladeluftaustritt aufweist. Die Luftführungshaube ist an der Kühllufteintrittsseite lösbar mit Befestigungselementen an den Luftleitkästen sowie zwischen diesen angeordnet. Hierzu dienen wenigstens eine Haltelasche aus Kunststoff mit wenigstens einer an dem einen Luftleitkasten angeordneten Zunge von im Wesentlichen rechteckigem Querschnitt und auf der der Haltelasche gegenüberliegenden Seite zwei Rastglieder aus Kunststoff für zwei im Abstand an dem anderen Luftleitkasten angeordnete Rastelemente.

Aus der DE 10 2006 037 761 A1 ist auch bereits eine Befestigungsanordnung für einen mit einem Wasserkühler verbundenen Ladeluftkühler bekannt, wobei der Wasserkühler wahlweise zusammen oder auch ohne den Ladeluftkühler an einer Haltestruktur im Frontend des Kraftfahrzeugs fixiert werden kann, um so einen modularen Aufbau zu schaffen. Die Fixiermittel des Wasserkühlers weisen einen nach unten vorspringenden Zapfen auf, der mit dem jeweiligen Zapfen des Ladeluftkühlers übereinstimmt, sodass der Wasserkühler auch ohne Zwischenschaltung des Ladeluftkühlers an der Haltestruktur fixiert werden kann.

Die Druckschrift DE 10 2009 059 930 A1 zeigt eine Kühleinrichtung, bei der zumindest zwei Kühlelemente mittels Steckverbindungen aneinander befestigt und in insbesondere parallelen Ebenen nacheinander von der zugeführten Umgebungsluft durchströmbar angeordnet sind. In ihrer die Kühlelemente verbindenden Fixierposition sind die Steckverbindungen jeweils in der Ebene parallel zu den Kühlelementen in zumindest eine Richtung eingeschränkt beweglich ausgeführt, wobei zumindest eine erste Steckverbindung in eine erste Richtung und zumindest eine zweite Steckverbindung in eine zweite Richtung quer zu der ersten Richtung beweglich ausgeführt ist.

Ferner zeigt DE 20 2009 011 439 U1, in der die Merkmale des Oberbegriffs von Anspruch 1 enthalten sind, eine Kombination von Steckverbindungen und als Verriegelung dienenden Profilelementen um eine zuverlässige Fixierung zu erreichen. Im Gegensatz zu der vorliegenden Erfindung sind hierfür jedoch zusätzlich zu den Profilelementen an jeder Fixierstelle jeweils erste und zweite Verbindungselemente erforderlich.

Aufgabe der vorliegenden Erfindung ist es, eine Kühleinrichtung für eine Brennkraftmaschine eines Kraftfahrzeugs zu schaffen, die eine schnelle Montage und eine hohe Prozesssicherheit ermöglicht. Ferner sollen der Fertigungsaufwand, insbesondere die Anzahl der bei der Montage zu handhabenden Teile reduziert werden.

Diese Aufgabe wird gelöst mit einer Befestigungsanordnung gemäß den Merkmalen des Patentanspruchs 1. Die Unteransprüche betreffen besonders zweckmäßige Weiterbildungen der Erfindung.

Erfindungsgemäß ist also eine Kühleinrichtung vorgesehen, bei der die zumindest eine erste Steckverbindung eine Loslagerseite bildend an einer ersten Kante, insbesondere an einer ersten Sammeleinrichtung der Kühlelemente angeordnet ist und die zumindest eine zweite Steckverbindung eine Festlagerseite bildend an einer der ersten Kante gegenüberliegenden zweiten Kante, insbesondere einer zweiten Sammeleinrichtung angeordnet ist.

Die Kühlelemente sind als Wärmetauscher ausgeführt, welche zahlreiche nebeneinander angeordnete und von einem Kühlmittel durchströmbare Rohrabschnitte umfassen. Die Wärmetauscher umfassen auch zwei einander gegenüberliegend angeordnete, ebenfalls von dem Kühlmittel durchströmbare Sammeleinrichtungen, welche durch die einzelnen, nebeneinander angeordneten Rohrabschnitte strömungstechnisch miteinander verbunden sind. Zur Aufnahme der offenen Endbereiche der Rohrabschnitte weisen die beiden Sammeleinrichtungen jeweils mehrere Durchbrechungen auf.

Hierdurch wird in überraschend einfacher Weise zugleich eine einfache, insbesondere sogar werkzeugslose Verbindung der Kühlelemente einerseits sowie eine problemlose Montage der so geschaffenen Baueinheit an einer Tragstruktur im vorderen Bereich des Kraftfahrzeugs andererseits realisiert, die zugleich einen Ausgleich unterschiedlicher thermischer Dehnungen der Kühlelemente durch die eingeschränkte Beweglichkeit ermöglicht. Erfindungsgemäß wird so ein einfacher modularer Aufbau ermöglicht, welcher eine problemlose Kombination von Kühlelementen mit einer im Betrieb auftretenden großen Differenz der Arbeitstemperaturen und der damit verbundenen unterschiedlichen thermischen Dehnung gestattet. Zudem dient diese Beweglichkeit zugleich dem Ausgleich von Fertigungstoleranzen, sodass die Montage vereinfacht wird. Dabei können die Kühlelemente in einer Reihenschaltung oder Parallelschaltung des Kühlmittels nacheinander von dem Kühlmittel durchströmbar ausgeführt sein. Vorzugsweise sind diese jedoch voneinander unabhängig in unterschiedlichen Kühlmittelkreisläufen angeordnet, wobei insbesondere ein Kühlelement als Niedertemperaturkühler und/oder ein Kühlelement als Hochtemperaturkühler ausgeführt ist. Die funktionale Aufteilung der Steckverbindungen in eine Loslagerseite und eine Festlagerseite ermöglicht eine Vereinfachung der Montage. Diese erfolgt bevorzugt in einer unterbrechungsfreien Bewegung, bei der die Kühlelemente zunächst translatorisch und dann rotatorisch aneinander bewegt werden. Dabei ist vorgesehen, dass in der Fixierposition an der Festlagerseite die thermische Dehnung in nur eine Richtung parallel zur Ebene der Kühlelemente vorgesehen ist, während an der Loslagerseite die thermische Dehnung in beide parallel zur Ebene der Kühlelemente orientierte Richtungen möglich ist.

Die erfindungsgemäße Ausgestaltung der Steckverbindung dient der insbesondere paarweisen Befestigung von Kühlelementen einer Kühleinrichtung aneinander. Kühlelemente einer Kühleinrichtung können neben dem zumindest einen Wärmetauscher, auch Kühler genannt, auch eine Lüfterhutze beziehungsweise ein Kondensator sein.

Die Verbindung der Kühlelemente aneinander erfolgt mittels Steckverbindungen, die aus einem an einem der Kühlelemente angeordneten Dorn und aus einer den Dorn bei der Montage der Kühlelemente aneinander und in der Fixierposition aufnehmenden Hülse bestehen. Die Komponenten Dorn und Hülse erlauben es, eine in mehrere Raumachsen wirkende formschlüssige Verbindung bereitzustellen, die ausreichend Toleranzen für die Aufnahme von thermischen Dehnungen aufweist. Bei einer Ausführungsform der Erfindung ist vorgesehen, dass eine Hülse zwei planparallele Begrenzungsflächen aufweist, welche in der Fixierposition planparallelen Gleitflächen eines Dorns zugeordnet sind. Dabei ist ein Abstand der Begrenzungsflächen zueinander geringfügig größer ausgebildet als der Abstand der Gleitflächen.

Die erfindungsgemäße Montage zweier Kühlelemente aneinander erfolgt in einer Montagerichtung, die im Wesentlichen einen Winkel kleiner 30 Grad, vorzugsweise 15 Grad, zu der Ebene des Kühlers aufweist. Dabei werden die Kühlelemente aneinander herangeführt und die Dorne in den Hülsen der zumindest einen ersten Steckverbindung angeordnet. Durch diese idealerweise translatorische Bewegung der Kühlelemente aufeinander zu werden diese mühelos von oben oder seitlich eingeschoben, wobei die erste Steckverbindung die Endposition definiert. Anschließend erfolgt die Fixierung der Kühlelemente aneinander. Dazu werden die Kühlelemente vorzugsweise rotatorisch aufeinander zubewegt. Die Montagerichtung, insbesondere der zumindest einen zweiten Steckverbindung, ist zu der Ebene der Kühlelemente im Wesentlichen senkrecht orientiert. Somit erfolgt die Festlegung der Kühlelemente durch die zweite Steckverbindung quer zu der jeweiligen Haupterstreckungsebene, sodass auf diese Weise eine schnelle und einfache Verbindung erreicht wird.

Dadurch, dass wie oben beschrieben eine Hülse zwei planparallele Begrenzungsflächen aufweist, welche in ihrer Fixierposition planparallele Gleitflächen eines Dorns zugeordnet sind und der Abstand der Begrenzungsflächen zueinander geringfügig größer ausgebildet ist als der Abstand der Gleitflächen, hat dies den Vorteil, dass ein einfaches Einfädeln der Steckverbindung möglich ist. Dadurch, dass die Begrenzungsflächen parallel zueinander, aber etwas seitenversetzt angeordent sind, ist die Möglichkeit gegeben, den Dorn zum einen einfach einzuführen und zum anderen um eine Drehachse zu bewegen, so dass es möglich ist, den Dorn einfach mit der Sammeleinrichtung zu drehen und zu verschieben, dabei aber in einer Endposition einen fest definierten Abstand zu gewährleisten. Dieser fest definierte Abstand ergibt sich durch die Entfernung der parallelen Gleitflächen und dem entsprechenden Versatz zueinander. Somit wird ein fester Halt bei der ersten Steckverbindung gewährleistet und bei der zweiten Steckverbindung wird ein fester Halt durch entsprechendes Einfädeln und letztendlich auch durch Rastverbindungen und/oder Rasthaken und/oder Verbindungsmitteln geschaffen.

Die Begrenzungsflächen sind parallel zueinander, jedoch in Bezug auf die erste Raumachse, versetzt angeordnet. Dadurch ergibt sich eine stufenförmige Ausbildung, wie diese in den Figuren dargestellt ist.

Die Orientierung der ersten Montagerichtung beziehungsweise die zweite Montagerichtung in der Art eines Einschwenkens wird dadurch möglich, dass die Begrenzungsflächen einer Hülse zumindest einer ersten Steckverbindung einander zugewandte Abschlusskanten aufweisen, deren Distanz zueinander größer ist als der Abstand zwischen den Begrenzungsflächen. Somit kann der Dorn zunächst in einem Winkel in der Hülse angeordnet werden. Bei der Bewegung in der zweiten Montagerichtung werden dann die Gleitflächen an den Begrenzungsflächen angelegt. Diese erfindungsgemäße Montagebewegung ermöglicht es, eine Kühleinrichtung zu schaffen, bei der die Bauteile, beispielsweise Anschlussstutzen, einzelner Kühlelemente an mehreren Seiten ein weiteres Kühlelement einfassen, und die sehr kompakt gestaltet ist. Darüber hinaus erlaubt die Montagebewegung eine schnelle und sichere Montage, da sich der Monteur beim Verbinden der ersten Steckverbindung zuerst nur auf die erste Montagerichtung konzentrieren muss und der seine Aufmerksamkeit dann zum Verbinden der zweiten Steckverbindung nur auf die zweite Montagerichtung richten muss. Eine Koordination von zwei gleichzeitigen unterschiedlichen Bewegungsrichtungen ist hier nicht erforderlich.

Zusammenfassend ist festzuhalten, dass es sich als günstig erwiesen hat, dass die zumindest eine erste Steckverbindung, vorzugsweise alle ersten Steckverbindungen der Loslagerseite in ihrer die Kühlelemente verbindenden Fixierposition jeweils in der zur Ebene der Kühlelemente senkrechten Richtung eingeschränkt beweglich ausgeführt ist. Darüber hinaus hat es sich auch als günstig erwiesen, dass die zumindest eine zweite Steckverbindung, vorzugsweise alle zweiten Steckverbindungen der Festlagerseite in ihrer die Kühlelemente verbindenden Fixierposition jeweils in der zur Ebene der Kühlelemente senkrechten Richtung und in den zur Ebene der Kühlelemente parallelen Richtungen eingeschränkt beweglich ausgeführt ist.

Dabei ist als eine besonders praxisgerechte Ausgestaltung vorgesehen, dass die Kühlelemente mittels der Steckverbindung lösbar verbunden sind, sodass die Kühlelemente im Service- oder Schadensfall separiert und voneinander entfernt oder ausgetauscht werden können. Dabei ist gemäß einer weiteren besonders empfehlenswerten Abwandlung zumindest eine Steckverbindung als eine Rastverbindung ausgeführt, sodass die Verbindung bei Erreichen der vorbestimmten Sollposition selbsttätig einrastet und die so eingestellte Position zuverlässig festlegt. Bei einer lösbaren Ausführung der Rastverbindung kann diese beispielsweise auch ausschließlich mittels eines entsprechenden Werkzeugs lösbar ausgeführt sein. Es hat sich als vorteilhaft erwiesen, die Rastverbindung zumindest einer zweiten, insbesondere aller zweiten Steckverbindungen der Festlagerseite mit einer Rastverbindung auszustatten und so die Fixierung der Kühlelemente aneinander einfach zu realisieren. Die Rastverbindung wirkt dabei bevorzugt in der zur Ebene der Kühlelemente senkrechten Richtung, verhindert also eine Bewegung der Kühlelemente entgegen der zweiten Montagerichtung.

Die Rastverbindungen bestehen aus einer vorzugsweise an dem Dorn angeordneten Hinterschneidung und wenigstens einem die Hinterschneidung in der Fixierposition umgreifenden und vorzugsweise an der Hülse angeordneten Rasthaken.

Für den erfindungsgemäß realisierbaren Ausgleich unterschiedlicher thermischer Dehnungen eignet sich eine Weiterbildung der Erfindung, bei welcher ein Kühlelement, insbesondere ein Ladeluftkühler oder Hochtemperaturkühler, von einem gasförmigen Kühlmittel durchströmbar ist, bevorzugt für eine Kühlmitteltemperatur des Kühlers bis zu 100 °C oberhalb eines flüssigen Kühlmittels eines anderen Kühlelements, insbesondere eines Wasserkühlers oder Niedertemperaturkühlers.

Besonders hilfreich ist es dabei in der Praxis auch, wenn die Kühlelemente, insbesondere der Wasserkühler mit dem Ladeluftkühler, mit vier paarweise baugleichen und/oder funktionsgleichen Steckverbindungen verbunden sind, sodass die modulare Erweiterbarkeit insbesondere auch bei in bereits vorhandenen Kraftfahrzeugen eingesetzten Kühleinrichtungen problemlos möglich ist. Hierzu sind an der Festlagerseite zumindest zwei zweite Steckverbindungen vorgesehen. Dabei ist es vorteilhaft, dass wenigstens zwei der Rasthaken der beiden Steckverbindungen quer zueinander orientiert sind. Hierdurch können der Verschleiß oder das Versagen einzelner Rasthaken kompensiert werden.

Eine besonders vorteilhafte Weiterbildung der Erfindung betrifft die Ausgestaltung zumindest einer der Steckverbindungen mit einer Ausnehmung zur Aufnahme eines zusätzlichen Verbindungsmittels. Als Verbindungsmittel ist beispielsweise eine Schraube und/oder eine Klammer vorgesehen. Das Verbindungsmittel kann einerseits bei Fahrzeugen mit erhöhter Belastung, wie Sportfahrzeugen oder Geländefahrzeugen, eingesetzt werden. Andererseits ist durch den Einsatz des Verbindungsmittels eine einfache und leicht verfügbare Fixierung, beispielsweise als Kundendienstlösung bei einem Versagen eines oder mehrerer Rasthaken möglich. Die Ausnehmung zur Aufnahme des Verbindungsmittels ist bevorzugt in dem Dorn und/oder der Hülse zumindest einer der zweiten Steckverbindungen angeordnet.

Als besondere Weiterbildung ist die Ausnehmung bis zum erstmaligen Gebrauch durch ein einstückig mit dem Dorn und/oder der Hülse ausgebildetes Filmelement geringer Wandstärke verschlossen. Das 0,1 Millimeter bis 0,5 Millimeter, vorzugsweise 0,2 Millimeter starke Filmelement verhindert das Eindringen von Verschmutzungen in die Ausnehmung und in die Steckverbindung. Zur Montage des Verbindungsmittels wird das Filmelement von dem Verbindungsmittel oder einem Werkzeug durchstoßen.

Die Erfindung lässt zahlreiche Ausführungsformen zu. Zur weiteren Verdeutlichung ihres Grundprinzips sind einige davon in der Zeichnung dargestellt und werden nachfolgend beschrieben. Diese zeigt in
- Fig. 1: eine schematische räumliche Darstellung der Montage einer ersten Ausführungsform einer Kühleinrichtung;
- Fig. 2: eine schematische Darstellung einer Ansicht der in Figur 1 gezeigten Kühleinrichtung;
- Fig. 3: eine schematische Darstellung einer Draufsicht der in Figur 1 gezeigten Kühleinrichtung bei der Montage zweier Kühlelemente in einem ersten Montageschritt;
- Fig. 4: eine schematische Darstellung einer Draufsicht der in Figur 1 gezeigten Kühleinrichtung bei der Montage zweier Kühlelemente in einem zweiten Montageschritt;
- Fig. 5: eine schematische Darstellung einer Draufsicht der in Figur 1 gezeigten Kühleinrichtung bei der Montage zweier Kühlelemente in einem dritten Montageschritt;
- Fig. 6: eine schematische Darstellung einer Draufsicht der in Figur 1 gezeigten Kühleinrichtung nach der Montage zweier Kühlelemente in der Endposition der Kühlelemente;
- Fig. 7: eine schematische Darstellung der zwei in den Figuren 3 bis 6 gezeigten Kühlelemente bei der Montage in einer vergrößerten Schnittdarstellung einer Loslagerseite;
- Fig. 8: eine schematische Darstellung der zwei in den Figuren 3 bis 6 gezeigten Kühlelemente in der Fixierposition in einer vergrößerten Schnittdarstellung einer Loslagerseite;
- Fig. 9: eine schematische Darstellung von zwei Varianten einer Steckverbindung einer Loslagerseite der in Figur 1 gezeigten Kühleinrichtung;
- Fig. 10: eine schematische Darstellung der ersten Variante der in Figur 9 gezeigten Steckverbindung;
- Fig. 11: eine schematische Darstellung der ersten Variante der in Figur 9 gezeigten Steckverbindung;
- Fig. 12: eine schematische Darstellung der ersten Variante der in Figur 9 gezeigten Steckverbindung;
- Fig. 13: eine schematische Darstellung der ersten Variante der in Figur 9 gezeigten Steckverbindung;
- Fig. 14: eine schematische Darstellung von zwei Varianten einer Steckverbindung einer Festlagerseite der in Figur 1 gezeigten Kühleinrichtung;
- Fig. 15: eine schematische Darstellung der ersten Variante der in Figur 14 gezeigten Steckverbindung;
- Fig. 16: eine schematische Darstellung der ersten Variante der in Figur 14 gezeigten Steckverbindung;
- Fig. 17: eine schematische Darstellung der ersten Variante der in Figur 14 gezeigten Steckverbindung;
- Fig. 18: eine schematische Darstellung der ersten Variante der in Figur 14 gezeigten Steckverbindung;
- Fig. 19: eine schematische Darstellung der ersten Variante der Steckverbindung der Festlagerseite in der Fixierposition in einer vergrößerten Ansicht;
- Fig. 20: eine schematische Darstellung der ersten Variante der Steckverbindung der Festlagerseite in der Fixierposition in einer vergrößerten Schnittdarstellung;
- Fig. 21: eine schematische Darstellung eines Ausschnitts einer zweiten Ausführungsform einer Kühleinrichtung mit einer ersten Variante eines Verbindungsmittels;
- Fig. 22: eine schematische Darstellung eines vergrößerten Ausschnitts der in Figur 21 gezeigten Kühleinrichtung mit der Steckverbindung der Festlagerseite mit der ersten Variante des Verbindungsmittels in einer Schnittdarstellung;
- Fig. 23: eine schematische Darstellung eines weiter vergrößerten Ausschnitts der in Figur 22 gezeigten Steckverbindung der Festlagerseite mit der ersten Variante des Verbindungsmittels in einer Schnittdarstellung;
- Fig. 24: eine schematische Darstellung eines vergrößerten Ausschnitts einer dritten Ausführungsform einer Kühleinrichtung mit einer besonderen Ausgestaltung einzelner Steckverbindungen der Loslagerseite;
- Fig. 25: eine schematische Darstellung eines vergrößerten Ausschnitts einer dritten Ausführungsform einer Kühleinrichtung mit einer besonderen Ausgestaltung einzelner Steckverbindungen der Loslagerseite;
- Fig. 26: eine schematische Darstellung eines vergrößerten Ausschnitts einer dritten Ausführungsform einer Kühleinrichtung mit einer besonderen Ausgestaltung einzelner Steckverbindungen der Festlagerseite;
- Fig. 27: eine schematische Darstellung eines vergrößerten Ausschnitts einer dritten Ausführungsform einer Kühleinrichtung mit einer besonderen Ausgestaltung einzelner Steckverbindungen der Festlagerseite;
- Fig. 28: eine schematische Darstellung eines Ausschnitts einer vierten Ausführungsform einer Kühleinrichtung mit einer zweiten Variante eines Verbindungsmittels;
- Fig. 29: eine schematische Darstellung eines vergrößerten Ausschnitts der in Figur 28 gezeigten Kühleinrichtung mit der Steckverbindung der Festlagerseite mit der zweiten Variante des Verbindungsmittels in einer Ansicht;
- Fig. 30: eine schematische Darstellung eines vergrößerten Ausschnitts der in Figur 28 gezeigten Kühleinrichtung mit der Steckverbindung der Festlagerseite mit der zweiten Variante des Verbindungsmittels in einer Schnittdarstellung;
- Fig. 31: in einer schematischen Darstellung eines vergrößerten Ausschnitts der in Figur 28 gezeigten Kühleinrichtung den Dorn der Steckverbindung der Festlagerseite;
- Fig. 32: in einer schematischen Darstellung eines vergrößerten Ausschnitts der in Figur 28 gezeigten Kühleinrichtung die zweite Variante des Verbindungsmittels der Steckverbindung der Festlagerseite.

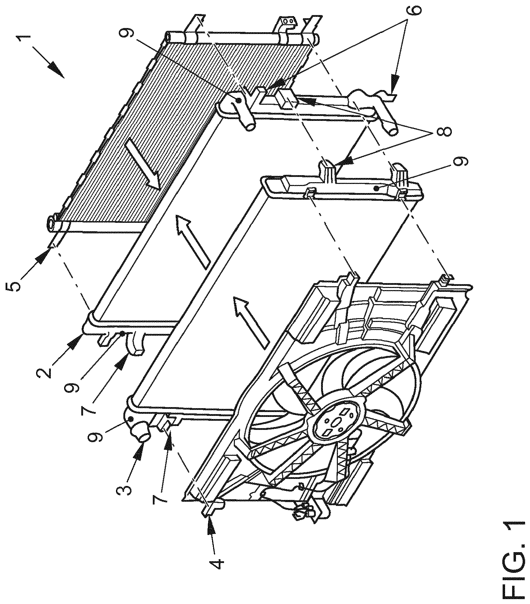

Figur 1 zeigt eine Kühleinrichtung 1 für ein nicht weiter dargestelltes Kraftfahrzeug. Die Kühleinrichtung 1 umfasst einen Niedertemperaturkühler 2 und einen Hochtemperaturkühler 3 als Kühlelemente 2, 3. Weitere Kühlelemente 4, 5 sind eine Lüfterhutze 4 und ein Kondensator 5. Zumindest die Kühlelemente 2, 3 sind in verschiedenen parallelen Ebenen nacheinander von der zugeführten Umgebungsluft durchströmbar angeordnet. An dem Niedertemperaturkühler 2 sind Flansche 6 zur Verbindung der Kühleinrichtung 1 mit dem Fahrzeug ausgebildet. Über die Flansche 6 werden alle Kräfte der Kühleinrichtung 1 in das Fahrzeug geleitet. Die anderen Kühlelemente 3, 4, 5 werden mittelbar und/oder unmittelbar an dem Niedertemperaturkühler 2 fixiert. Zum Verbinden der Kühlelemente 2, 3, 4, 5, insbesondere des Niedertemperaturkühlers 2 und des Hochtemperaturkühlers 3 aneinander sind Steckverbindungen 7, 8 vorgesehen. Die Steckverbindungen 7, 8 sind an gegenüberliegenden Rändern der Kühlelemente 2, 3, 4, 5 angeordnet. Bei dem dargestellten Niedertemperaturkühler 2 und Hochtemperaturkühler 3 sind die Steckverbindungen 7, 8 an den Sammeleinrichtungen 9 der Kühler angeordnet. Die Reihenfolge der Montage der Kühlelemente 2, 3, 4, 5 aneinander ist durch die gestrichelten Pfeile angedeutet. Vorzugsweise wird erst der Kondensator 5 an dem Niedertemperaturkühler 2 fixiert und dann der Niedertemperaturkühler 2 an dem Fahrzeug. Anschließend wird zunächst der Hochtemperaturkühler 3 an dem Niedertemperaturkühler 2 und dann die Lüfterhutze 4 an dem Hochtemperaturkühler 3 befestigt.

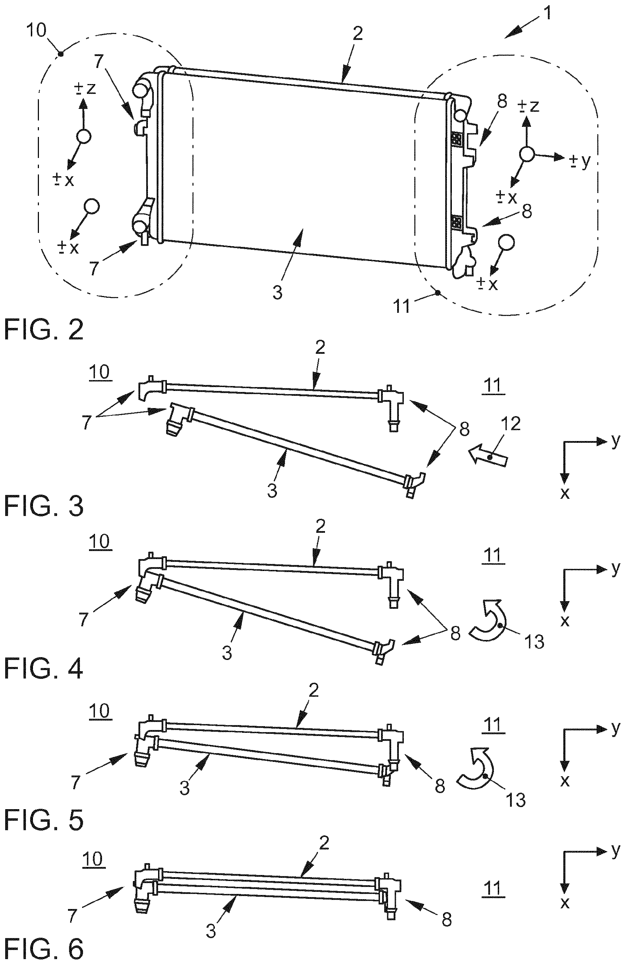

Figur 2 zeigt eine schematische Darstellung der Kühleinrichtung 1. Die Steckverbindungen 7, 8 beiderseits der Kühlelemente 2, 3 sind zumindest funktionell unterschiedlich ausgeführt. Auf einer Loslagerseite 10 genannten Seite der Kühlelemente 2, 3 sind zwei erste Steckverbindungen 7 vorgesehen. An der Loslagerseite 10 ist eine translatorische Bewegung der beiden Kühlelemente 2, 3 relativ zueinander und parallel zu der mit Y bezeichneten ersten Raumachse möglich. Hierzu ist es ausreichend, wenn eine translatorische Bewegung der Kühlelemente 2, 3 relativ zueinander und parallel zu der zweiten Raumachse X und der dritten Raumachse Z jeweils durch zumindest eine der beiden ersten Steckverbindungen 7 unterdrückt wird. In der gezeigten Ausführungsform ist eine erste Steckverbindung 7 als ein parallel zur zweiten Raumachse X wirkendes Widerlager ausgebildet und die andere erste Steckverbindung 7 als ein parallel zu der zweiten Raumachse X und der dritten Raumachse Z wirkendes Widerlager ausgeführt. Auf einer Festlagerseite 11 genannten Seite der Kühlelemente 2, 3 sind zwei zweite Steckverbindungen 8 vorgesehen. An der Festlagerseite 11 ist eine translatorische Bewegung der beiden Kühlelemente 2, 3 relativ zueinander und parallel zu allen drei Raumachsen X, Y, Z gesperrt. Hierzu ist es erforderlich, dass zumindest eine der beiden zweiten Steckverbindungen 8 die translatorische Bewegung der Kühlelemente 2, 3 relativ zueinander und parallel zu den Raumachsen X, Y und Z unterdrückt. In der gezeigten Ausführungsform ist eine zweite Steckverbindung 8 als ein parallel zu allen Raumachsen X, Y, Z wirkendes Widerlager ausgebildet und die andere zweite Steckverbindung 8 als ein parallel zu der zweiten Raumachse X wirkendes Widerlager ausgeführt. Die Loslagerseite 10 und die Festlagerseite 11 umfassen jeweils die zwei gegenüberliegenden Kanten, hier die beiden gegenüberliegenden Sammeleinrichtungen 9 der Kühlelemente 2, 3.

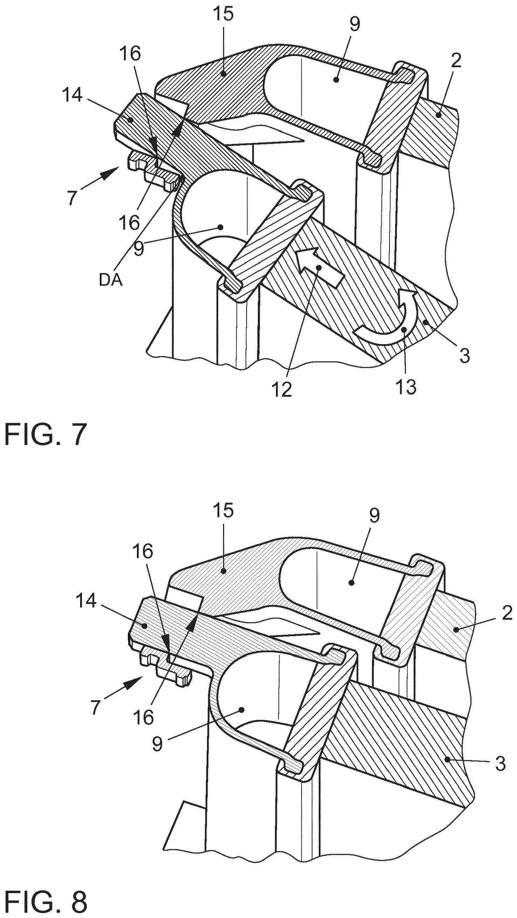

Die Figuren 3 bis 6 zeigen Draufsichten auf die Kühlelemente 2, 3 zur Erläuterung der erfindungsgemäßen Montageschritte zur Fixierung der Kühlelemente 2, 3 aneinander. Dabei ist in Figur 3 der erste Montageschritt dargestellt. Hier wird in einer ersten Montagerichtung 12 der Hochtemperaturkühler 3 translatorisch an den Niedertemperaturkühler 2 heranbewegt. Die beiden Kühlelemente 2, 3 schließen dabei einen Winkel von 15 Grad ein. An der Loslagerseite 10 werden die ersten Steckverbindungen 7 ineinander eingefädelt. Dieses Einfädeln ist in Figur 7 vergrößert dargestellt. Der zweite Montageschritt ist in Figur 4 dargestellt. Nachdem die ersten Steckverbindungen 7 eingefädelt sind und die Kühlelemente 2, 3 in der ersten Montagerichtung 12 ihre Anschlagposition erreicht haben, wird in einer zweiten Montagerichtung 13 der Hochtemperaturkühler 3 rotatorisch an den Niedertemperaturkühler 2 heranbewegt. Der Winkel zwischen den beiden Kühlelementen 2, 3 wird dabei bis auf ungefähr 5 Grad verringert. In Figur 5 ist gezeigt, wie in dem dritten Montageschritt die zweiten Steckverbindungen 8 der Festlagerseite 11 ineinander geführt werden. Dabei erfolgt die Bewegung zumindest des Kühlelements 3 weiter in der zweiten Montagerichtung 13, bis die zweiten Steckverbindungen 8 verriegeln und die beiden Kühlelemente 2, 3 aneinander fixieren. Abschließend sind in Figur 6 die aneinander gehaltenen Kühlelemente 2, 3 in ihrer Fixierposition dargestellt. Zum Erreichen der Fixierposition sind die zwei Kühlelemente 2, 3 mittels der Steckverbindungen 7, 8 miteinander verbunden, wobei zumindest eine erste Steckverbindung 7 parallel zu der ersten Montagerichtung 12 und zumindest eine zweite Steckverbindung 8 parallel zu der zweiten Montagerichtung 13 quer zu der ersten Montagerichtung 12 beweglich ausgeführt ist. In ihrer Fixierposition sind zumindest die ersten Steckverbindungen 7 parallel zu zumindest einer ersten Raumachse Y beweglich ausgeführt.

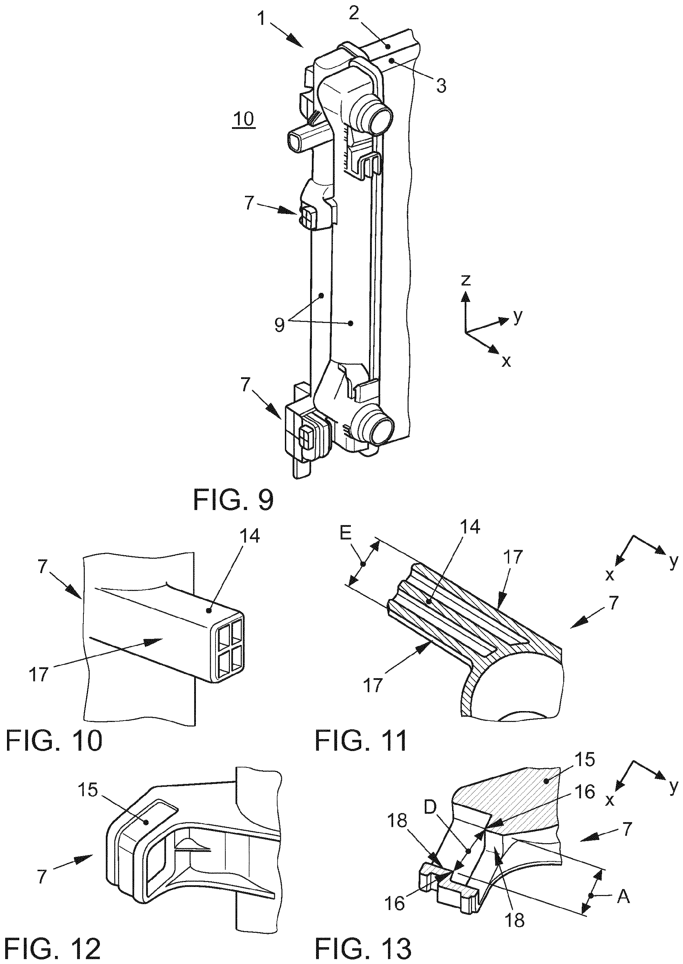

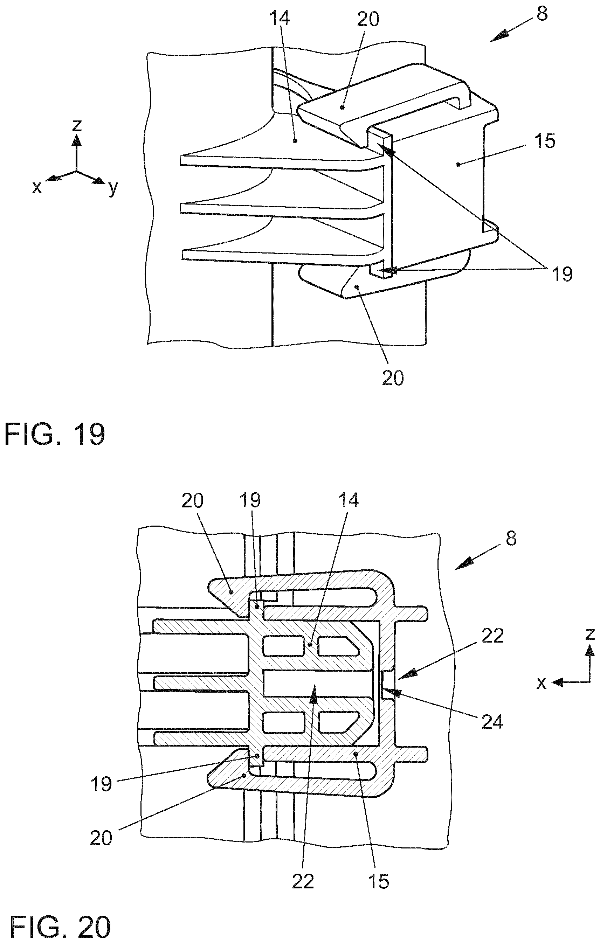

Die Figuren 7 und 8 zeigen die Loslagerseite 10 der zwei in den Figuren 3 bis 6 gezeigten Kühlelemente 2, 3 in einer vergrößerten Schnittdarstellung. Dabei ist in Figur 7 die Montage der Kühlelemente 2, 3 aneinander und in Figur 8 die zum Ende der Montage erreichte Fixierposition der Kühlelemente 2, 3 dargestellt. Die Steckverbindungen 7, 8, auch der unter anderem in den Figuren 19 und 20 gezeigten Festlagerseite 11, bestehen aus einem Dorn 14 und einer Hülse 15. Dabei ist in der gezeigten Ausführungsform der Dorn 14 an dem Hochtemperaturkühler 3 und die Hülse 15 an dem Niedertemperaturkühler 2 ausgebildet. Die Hülse 15 nimmt bei der Montage und in der Fixierposition den Dorn 14 auf. Bei der Montage wird der Dorn 14 von zwei in der Hülse 15 ausgebildeten in Figur 13 gezeigten Abschlusskanten 16 geführt beziehungsweise bei der Bewegung des einen Kühlelements 3 in der zweiten Montagerichtung 13 von den Abschlusskanten 16 gehalten. Dies hat den großen Vorteil, dass in einer ersten Position der Dorn 14 einfach eingefädelt werden kann. In einer zweiten Endposition wird der Dorn 14 fest zwischen den Abschlusskanten 16 gehalten. Beim Drehen des Domes hat dieser in der ersten Montagerichtung 12 einen ersten Freiheitsgrad. Ferner kann der Dorn 14 um die Drehachse DA eine Rotationsbewegung durchzuführen. Auch lässt der Dorn 14 eine Verschiebung entgegen der ersten Montagerichtung 12 zu, so dass der Dorn 14 in seiner Montage einfacher positioniert werden kann. Dies wird erreicht durch die stufenhafte Ausgestaltung der Begrenzungsflächen. Ferner wird in der Endstellung einen fester Halt gewährleisten.

Die Figuren 9 bis 13 zeigen die erste Steckverbindung 7 der Loslagerseite 10. In Figur 9 ist in einem Ausschnitt der Kühleinrichtung 1 die Loslagerseite 10 mit zwei ersten Steckverbindungen 7 gezeigt. Die Steckverbindungen 7 sind an den Sammeleinrichtungen 9 der Kühlelemente 2, 3 ausgebildet. Ein Dorn 14 der ersten Steckverbindung 7 ist in Figur 10 in einer Ansicht und in Figur 11 in einer Schnittdarstellung gezeigt. Der Dorn 14 hat einen rechteckigen Querschnitt mit abgerundeten Kanten. Weiterhin hat der Dorn 14 zumindest zwei planparallele Gleitflächen 17. Eine Hülse 15 der ersten Steckverbindung 7 ist in Figur 12 in einer Ansicht und in Figur 13 in einer Schnittdarstellung gezeigt. Die Hülse 15 ist zur Aufnahme des Dorns 14 vorgesehen. Die Hülse 15 umfasst zwei planparallele Begrenzungsflächen 18, an denen in der Fixierposition die Gleitflächen 17 des Dorns 14 formschlüssig anliegen und welche so ein Widerlager bilden. Der Abstand A der Begrenzungsflächen 18 zueinander ist geringfügig größer ausgebildet als die Entfernung E der Gleitflächen 17 zueinander. Um ein Einfädeln des Dorns 14 in die Hülse 15 bei der Bewegung in der ersten Montagerichtung 12 zu ermöglichen, haben die Begrenzungsflächen 18 der Hülsen 15 der ersten Steckverbindung 7 einander zugewandte Abschlusskanten 16, deren Distanz D zueinander größer ist als der Abstand A zwischen den Begrenzungsflächen 18. Die ersten Steckverbindungen 7 der Loslagerseite 10 sind in der die Kühlelemente 2, 3 verbindenden Fixierposition jeweils in der zur Ebene der Kühlelemente 2, 3 senkrechten zweiten Raumachse X unbeweglich als Widerlager ausgeführt. Die Begrenzungsflächen 18 sind parallel zueinander, jedoch in Bezug auf die erste Raumachse, versetzt angeordnet. Dadurch ergibt sich eine stufenförmige Ausbildung. So kann der Dorn 14 (hier nicht dargestellt) in seiner Montage einfacher positioniert werden kann. Ferner wird in der Endstellung einen fester Halt gewährleisten.

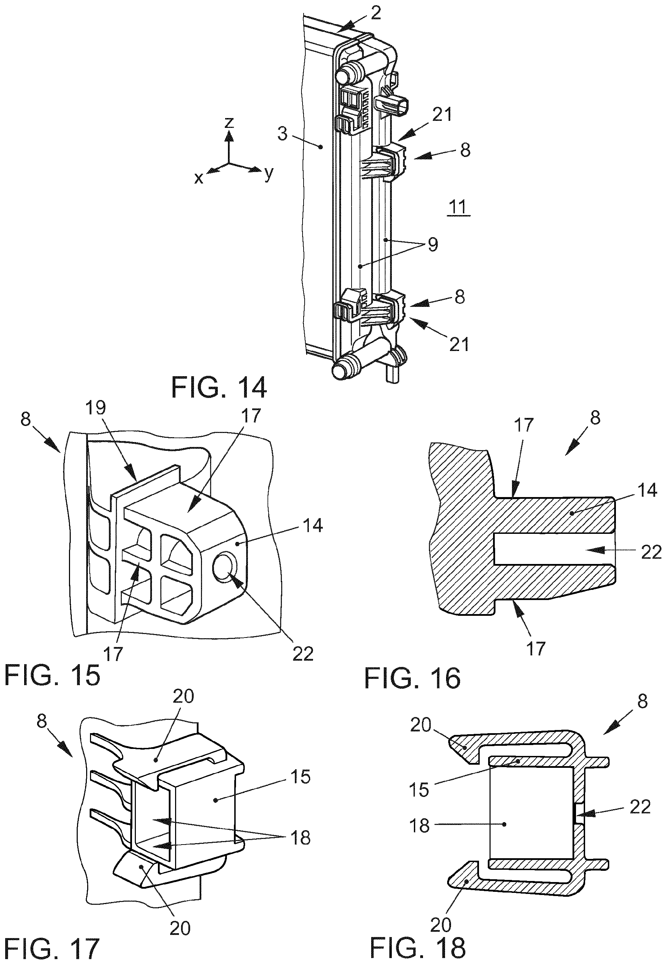

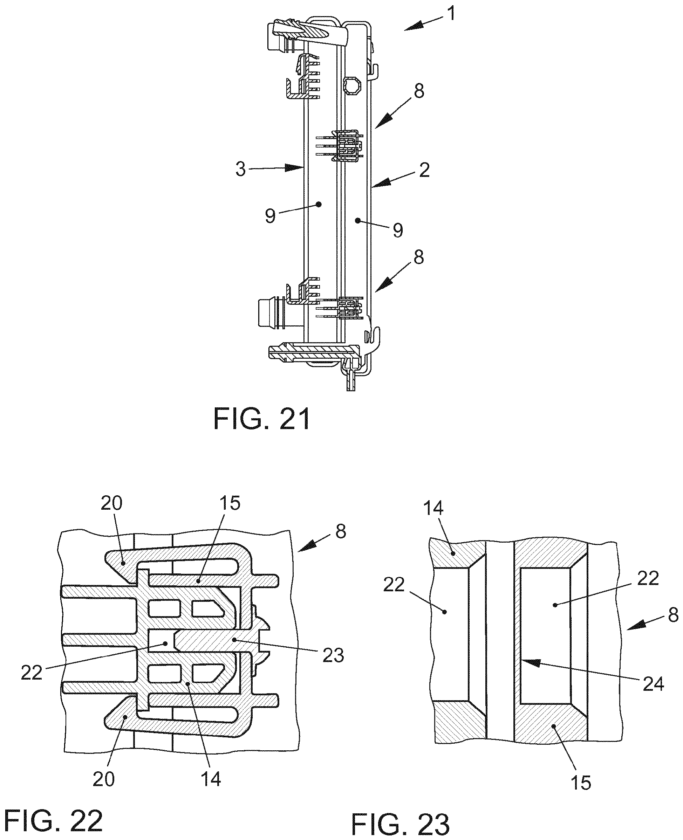

Die Figuren 14 bis 18 zeigen die zweite Steckverbindung 8 der Festlagerseite 11. In Figur 14 ist in einem Ausschnitt der Kühleinrichtung 1 die Festlagerseite 11 mit zwei Varianten der zweiten Steckverbindung 8 gezeigt. Die Steckverbindungen 8 sind an den Sammeleinrichtungen 9 der Kühlelemente 2, 3 ausgebildet. Ein Dorn 14 der zweiten Steckverbindung 8 ist in Figur 15 in einer Ansicht und in Figur 16 in einer Schnittdarstellung gezeigt. Der Dorn 14 hat einen rechteckigen Querschnitt mit abgerundeten Kanten. Weiterhin hat der Dorn 14 zumindest zwei planparallele Gleitflächen 17. Eine Hülse 15 der zweiten Steckverbindung 8 ist in Figur 17 in einer Ansicht und in Figur 18 in einer Schnittdarstellung gezeigt. Die Hülse 15 ist zur Aufnahme des Dorns 14 vorgesehen. Die Hülse 15 umfasst zwei planparallele Begrenzungsflächen 18, an denen in der Fixierposition die Gleitflächen 17 des Dorns 14 formschlüssig anliegen und welche so ein Widerlager bilden. Der Abstand der Begrenzungsflächen 18 zueinander ist geringfügig größer oder gleich groß ausgebildet als die Entfernung der Gleitflächen 17 zueinander. Vorzugsweise ist der Übergang in der Endposition spaltfrei. Die zweite Steckverbindung 8 der Festlagerseite 11 weist eine Rastverbindung 21 bestehend aus zumindest einer Hinterschneidung 19 und wenigstens einem die Hinterschneidung 19 in der Fixierposition umgreifenden Rasthaken 20 auf. Die Rastverbindung 21 fixiert in der Fixierposition in Richtung der zur Ebene der Kühlelemente 2, 3 senkrechten zweiten Raumachse X die Kühlelemente 2, 3. In der dargestellten Ausführungsform ist vorgesehen, dass die Hinterschneidung 19 an dem Dorn 14 angeordnet und an der Hülse 15 zumindest ein Rasthaken 20 vorgesehen ist. In dem Dorn 14 und der Hülse 15 sind in Figur 20 gezeigte Ausnehmungen 22 vorgesehen. Die Ausnehmungen 22 dienen der Aufnahme eines zusätzlichen Verbindungsmittels 23, wie es in den Figuren 21 bis 23 und 28 bis 31 dargestellt ist.

Die Figuren 19 und 20 zeigen die zweite Steckverbindung 8 der Festlagerseite 11 in vergrößerten Darstellungen in der Fixierposition 11. Dabei ist in Figur 19 eine Ansicht der zweiten Steckverbindung 8 und in Figur 20 ein Schnitt durch die zweite Steckverbindung 8 gezeigt. Bei der hier gezeigten ersten Variante der zweiten Steckverbindung 8 sind an einer Hülse 15 zwei Rasthaken 20 vorgesehen, die an zwei gegenüberliegenden Seiten der Hülse 15 parallel zueinander positioniert sind. Die Redundanz mit zwei Rasthaken 20 ermöglicht eine Kompensation bei einem Verschleiß von einem der Rasthaken 20. Die Rasthaken 20 sind außenseitig der Hülse 15 angeordnet und erstrecken sich über nahezu die gesamte Länge der Hülse 15. Diese Merkmale erleichtern die Montage. Die zweite Steckverbindung 8 der Festlagerseite 11 ist in ihrer die Kühlelemente 2, 3 verbindenden Fixierposition in Richtung der zur Ebene der Kühlelemente 2, 3 senkrechten zweiten Raumachse X und in Richtung der zur Ebene der Kühlelemente 2, 3 parallelen ersten Raumachse Y und dritten Raumachse Z unbeweglich als Widerlager ausgeführt.

Die Figuren 21 bis 23 zeigen eine zweiten Ausführungsform der Kühleinrichtung 1. Bei dieser Ausführungsform ist die Steckverbindung 8 der Festlagerseite 11 zusätzlich zu der Rastverbindung 21 mit einer ersten Variante eines Verbindungsmittels 23 fixiert und gesichert. Das Verbindungsmittel 23 ist in der gezeigten ersten Variante eine Schraube, welche die Hülse 15 und den Dorn 14 formschlüssig und/oder kraftschlüssig lösbar verbindet. Die Anordnung des Verbindungsmittels 23 ist beispielsweise bei der Instandsetzung und/oder zur Ertüchtigung der Kühleinrichtung 1, insbesondere bei der Steckverbindung 8 vorgesehen. Für die Erleichterung der Montage des zusätzlichen Verbindungsmittels 23 sind in dem Dorn 14 und der Hülse 15 jeweils zueinander konzentrische Ausnehmungen 22 vorgesehen. Die Ausnehmungen 22 sind auch in den Figuren 15, 16 und 18 dargestellt und dienen der Aufnahme des Verbindungsmittels 23, wie es in den Figuren 12 und 22 gezeigt ist. In der Regel ist das zusätzliche Verbindungsmittel 23 jedoch nicht erforderlich. Daher ist zumindest die Ausnehmung 22 der Hülse 15 bis zur erstmaligen Aufnahme des Verbindungsmittels 23 durch ein einstückig mit der Hülse 15 ausgebildetes Filmelement 24 geringer Wandstärke verschlossen. Diesen Zustand zeigt Figur 23. Das Filmelement 24 verhindert das Eindringen von Verschmutzungen in die Ausnehmungen 22 und in die Steckverbindung 8. Bei der erstmaligen Montage des Verbindungsmittels 23 wird das Filmelement 24 von dem Verbindungsmittel 23 oder einem Werkzeug durchstoßen und zerstört.

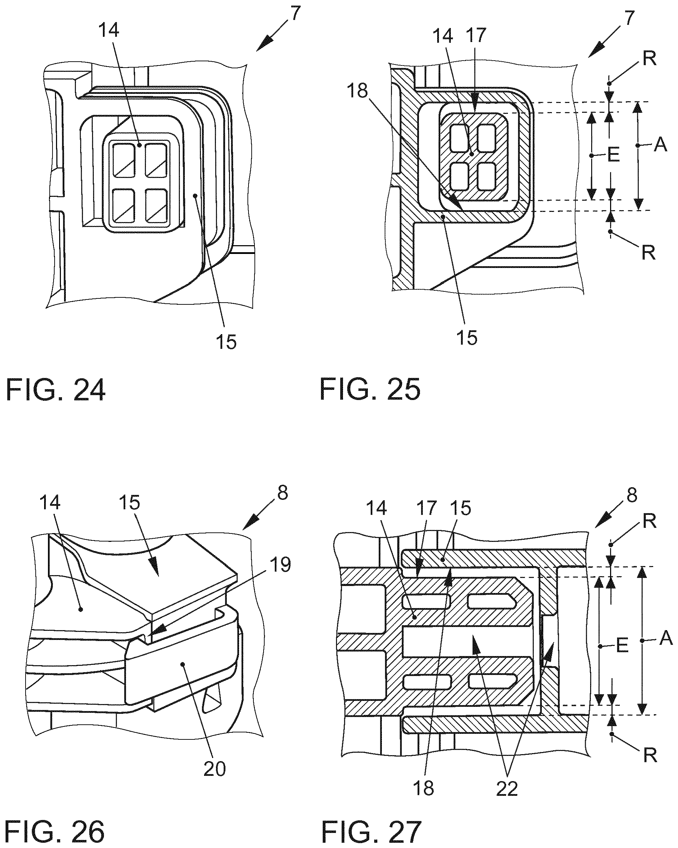

Die Figuren 24 bis 27 zeigen einen vergrößerten Ausschnitt einer dritten Ausführungsform der Kühleinrichtung 1. Dabei ist in den Figuren 24 und 25 eine zweite Variante der ersten Steckverbindung 7 der Loslagerseite 10 und in den Figuren 26 und 27 eine zweite Variante der zweiten Steckverbindung 8 der Festlagerseite 11 dargestellt. Bei diesen zweiten Varianten ist im Gegensatz zur ersten, in den Figuren 9 bis 18 gezeigten Variante der Steckverbindungen 7, 8 der Abstand A der Begrenzungsflächen 18 der Hülse 15 zueinander deutlich größer ausgebildet als die Entfernung E der Gleitflächen 17 des Dorns 14 zueinander. Der Zwischenraum R zwischen einander zugewandten Gleitflächen 17 und Begrenzungsflächen 18 beträgt bei der zweiten Variante der Steckverbindungen 7, 8 ungefähr 1,5 Millimeter. Dies ermöglicht einen Toleranzausgleich in Richtung der dritten Raumachse Z. Bei der ersten Variante der Steckverbindungen 7, 8 ist dieser Zwischenraum R kleiner als 0,5 Millimeter und beträgt vorzugsweise ungefähr 0,1 Millimeter. Darüber hinaus umfasst die Hülse 15 der zweiten Variante der zweiten Steckverbindung 8 der Festlagerseite 11 einen Rasthaken 20, welcher quer zu den Rasthaken 20 der ersten Variante der zweiten Steckverbindung 8 der Festlagerseite 11 ausgerichtet ist.

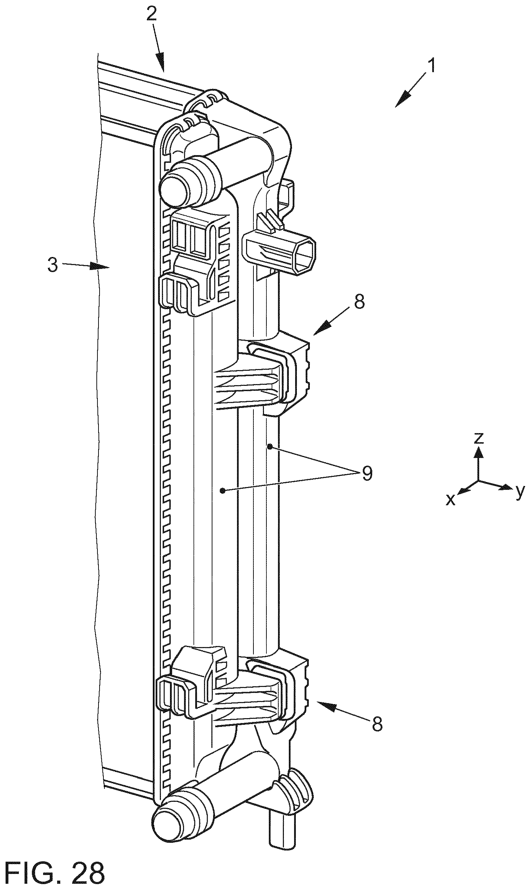

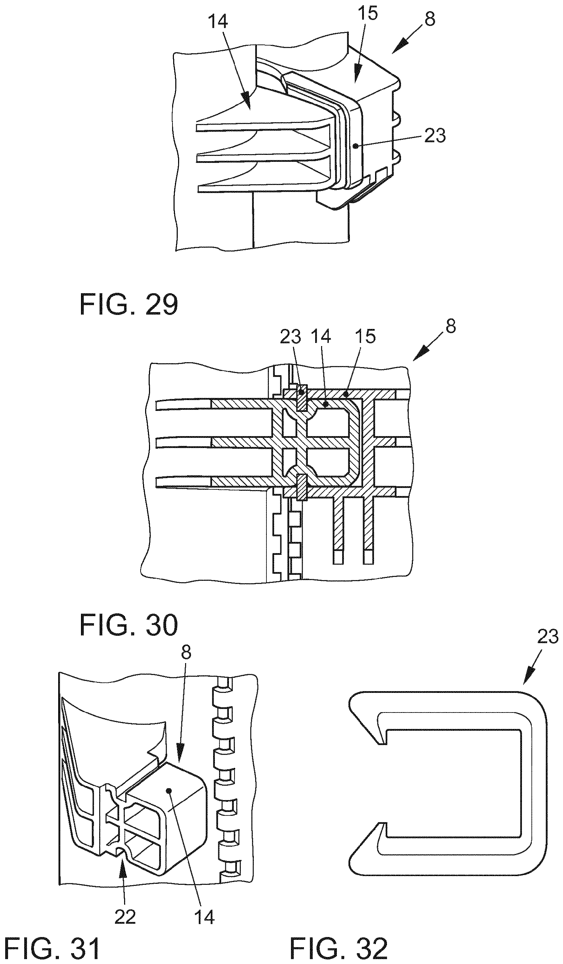

Die Figuren 28 bis 32 zeigen einen Ausschnitt einer vierten Ausführungsform der Kühleinrichtung 1 mit einer zweiten Variante eines Verbindungsmittels 23. Bei dieser Ausführungsform wird an der Festlagerseite 11 die lösbare Fixierung des Dorns 14 und der Hülse 15 aneinander mittels der zweiten Variante eines Verbindungsmittels 23 realisiert. Dieses Verbindungsmittel 23 ist eine in Figur 32 dargestellte Klammer, die in den Ausnehmungen 22 von Dorn 14 und Hülse 15 angeordnet wird. Die Ausnehmungen 22 zur Aufnahme der zweiten Variante eines Verbindungsmittels 23 sind als fluchtende Nuten ausgebildet. In einer weiteren figürlich nicht dargestellten Ausführungsform der Kühleinrichtung 1 umgreift die zweite Variante eines Verbindungsmittels 23 die Rasthaken 20 einer Rastverbindung 21, wie sie unter anderem in den Figuren 19 und 26 dargestellt ist.

**Bezugszeichenliste**

| | | | |
|---|---|---|---|
| 1 | Kühleinrichtung Kühlelement, | 21 | Rastverbindung |
| | | 22 | Ausnehmung |
| 2 | Niedertemperaturkühler Kühlelement, | | |
| | | 23 | Verbindungsmittel |
| 3 | Hochtemperaturkühler | | |
| 4 | Kühlelement, Lüfterhutze | 24 | Filmelement |
| 5 | Kühlelement, Kondensator | | |
| | | | |
| 6 | Flansch | A | Abstand (Begrenzungsflächen) |
| 7 | Erste Steckverbindung | D | Distanz (Abschlusskanten) |
| 8 | Zweite Steckverbindung | E | Entfernung (Gleitflächen) |
| 9 | Sammeleinrichtung | R | Zwischenraum |
| 10 | Loslagerseite | X | Zweite Raumachse |
| | | Y | Erste Raumachse |
| 11 | Festlagerseite | | |
| 12 | Erste Montagerichtung | Z | Dritte Raumachse |
| 13 | Zweite Montagerichtung | DA | Drehachse |
| 14 | Dorn | | |
| 15 | Hülse | | |
| | | | |
| 16 | Abschlusskante | | |
| 17 | Gleitfläche | | |
| 18 | Begrenzungsfläche | | |
| 19 | Hinterschneidung | | |
| 20 | Rasthaken | | |

## Patentansprüche

1. Kühleinrichtung (1) für ein Kraftfahrzeug, wobei die Kühleinrichtung (1) zumindest zwei Kühlelemente (2, 3, 4, 5) umfasst, die in verschiedenen, insbesondere parallelen Ebenen nacheinander von der zugeführten Umgebungsluft durchströmbar angeordnet und mittels Steckverbindungen (7, 8) miteinander verbunden sind, wobei zumindest eine erste Steckverbindung (7) bei der Montage entlang einer ersten Raumachse (Y) und zumindest eine zweite Steckverbindung (8) bei der Montage entlang einer zweiten Raumachse (X) quer zu der ersten Raumachse (Y) beweglich ausgeführt ist und die zumindest eine der ersten Steckverbindungen (7) in ihrer die Kühlelemente (2, 3, 4, 5) verbindenden Fixierposition jeweils in der Ebene parallel zu den Kühlelementen (2, 3, 4, 5) in Richtung zumindest einer Raumachse (Y) eingeschränkt beweglich ausgeführt ist, wobei die zumindest eine erste Steckverbindung (7) eine Loslagerseite (10) bildend an einer ersten Kante, insbesondere an einer ersten Sammeleinrichtung (9) der Kühlelemente (2, 3, 4, 5) angeordnet ist und die zumindest eine zweite Steckverbindung (8) eine Festlagerseite (11) bildend an einer der ersten Kante gegenüberliegenden zweiten Kante, insbesondere einer zweiten Sammeleinrichtung (9) angeordnet ist, **dadurch gekennzeichnet, dass** die Steckverbindungen (7, 8) aus einem an einem der Kühlelemente (2, 3, 4, 5) angeordneten Dorn (14) und aus einer den Dorn (14) bei der Montage der Kühlelemente (2, 3, 4, 5) aneinander und in der Fixierposition aufnehmenden Hülse (15) bestehen, wobei die Hülse (15) zwei planparallele Begrenzungsflächen (18) umfasst, welche in der Fixierposition planparallelen Gleitflächen (17) des Dorns (14) zugeordnet sind, und deren Abstand (A) zueinander geringfügig größer als die Entfernung (E) der Gleitflächen (17) ausgebildet ist und die Begrenzungsflächen (18) derart entlang der ersten Raumachse (Y) versetzt zueinander angeordnet sind, dass eine stufenförmige Ausgestaltung der Begrenzungsflächen (18) erreicht wird.

2. Kühleinrichtung (1) für ein Kraftfahrzeug nach den Ansprüchen 1, **dadurch gekennzeichnet, dass** die zumindest eine erste Steckverbindung (7) eine Montagerichtung (12) aufweist, die in einem Winkel von weniger als 30 Grad zu der Ebene der Kühlelemente (2, 3, 4, 5) orientiert ist und/oder die zumindest eine zweite Steckverbindung (8) eine Montagerichtung (13) aufweist, die zu der Ebene der Kühlelemente (2, 3, 4, 5) im Wesentlichen senkrecht orientiert ist.

3. Kühleinrichtung (1) für ein Kraftfahrzeug nach zumindest einem der vorangehenden Ansprüche, **dadurch gekennzeichnet, dass** die Begrenzungsflächen (18) einer Hülse (15) zumindest einer ersten Steckverbindung (7) einander zugewandte Abschlusskanten (16) aufweisen, deren Distanz (D) zueinander größer ist als der Abstand (A) zwischen den Begrenzungsflächen (18).

4. Kühleinrichtung (1) für ein Kraftfahrzeug nach zumindest einem der vorangehenden Ansprüche, **dadurch gekennzeichnet, dass** die zumindest eine erste Steckverbindung (7) der Loslagerseite (10) in ihrer die Kühlelemente (2, 3, 4, 5) verbindenden Fixierposition jeweils in Richtung der zur Ebene der Kühlelemente (2, 3, 4, 5) senkrechten zweiten Raumachse (X) unbeweglich ausgeführt ist und/oder die zumindest eine zweite Steckverbindung (8) der Festlagerseite (11) in ihrer die Kühlelemente (2, 3, 4, 5) verbindenden Fixierposition jeweils in Richtung der zur Ebene der Kühlelemente (2, 3, 4, 5) senkrechten zweiten Raumachse (X) und in Richtung der zur Ebene der Kühlelemente (2, 3, 4, 5) parallelen ersten Raumachse (Y) und dritten Raumachse (Z) unbeweglich ausgeführt ist.

5. Kühleinrichtung (1) für ein Kraftfahrzeug nach zumindest einem der vorangehenden Ansprüche, **dadurch gekennzeichnet, dass** die zumindest eine zweite Steckverbindung (8) der Festlagerseite (11) in ihrer die Kühlelemente (2, 3, 4, 5) verbindenden Fixierposition jeweils in der zur Ebene der Kühlelemente (2, 3, 4, 5) senkrechten Richtung durch eine Rastverbindung (21) fixiert ist.

6. Kühleinrichtung (1) für ein Kraftfahrzeug nach Anspruch 5, **dadurch gekennzeichnet, dass** die Rastverbindung (21) aus einer vorzugsweise an dem Dorn (14) angeordneten Hinterschneidung (19) und wenigstens einem die Hinterschneidung (19) in der Fixierposition umgreifenden und vorzugsweise an der Hülse (15) angeordneten Rasthaken (20) besteht.

7. Kühleinrichtung (1) für ein Kraftfahrzeug nach Anspruch 6, **dadurch gekennzeichnet, dass** an der Festlagerseite (11) zumindest zwei zweite Steckverbindungen (8) vorgesehen sind, wobei wenigstens zwei der Rasthaken (20) der beiden Steckverbindungen (8) quer zueinander orientiert sind.

8. Kühleinrichtung (1) für ein Kraftfahrzeug nach zumindest einem der vorangehenden Ansprüche, **dadurch gekennzeichnet, dass** bei zumindest einer zweiten Steckverbindung (8) in dem Dorn (14) und/oder der Hülse (15) eine Ausnehmung (22) zur Aufnahme eines zusätzlichen Verbindungsmittels (23) vorgesehen ist.

## Claims

1. Cooling device (1) for a motor vehicle, wherein the cooling device (1) comprises at least two cooling elements (2, 3, 4, 5) which are arranged in different, in particular parallel, planes in such a manner that the supplied ambient air can flow successively through them, and are connected to one another by means of plug-in connections (7, 8), wherein at least one first plug-in connection (7) is designed to be moveable during the mounting along a first spatial axis (Y) and at least one second plug-in connection (8) is designed to be movable during the mounting along a second spatial axis (X) transversely with respect to the first spatial axis (Y) and at least one of the first plug-in connections (7), in its fixing position connecting the cooling elements (2, 3, 4, 5), is designed to be movable to a limited extent in the direction of at least one spatial axis (Y) in each case in the plane parallel to the cooling elements (2, 3, 4, 5), wherein the at least one first plug-in connection (7) is arranged, forming a moveable bearing side (10), on a first edge, in particular on a first collecting device (9) of the cooling elements (2, 3, 4, 5), and the at least one second plug-in connection (8) is arranged, forming a fixed bearing side (11), on a second edge opposite the first edge, in particular of a second collecting device (9), **characterized in that** the plug-in connections (7, 8) consist of a spike (14) arranged on one of the cooling elements (2, 3, 4, 5) and of a sleeve (15) receiving the spike (14) during the mounting of the cooling elements (2, 3, 4, 5) on one another and in the fixing position, wherein the sleeve (15) comprises two plane-parallel boundary surfaces (18) which, in the fixing position, are assigned to plane-parallel sliding surfaces (17) of the spike (14), and the spacing (A) of said boundary surfaces from each other is designed to be slightly larger than the distance (E) between the sliding surfaces (17), and the boundary surfaces (18) are arranged offset with respect to each other along the first spatial axis (Y) in such a manner that a step-shaped configuration of the boundary surfaces (18) is achieved.

2. Cooling device (1) for a motor vehicle according to Claims 1, **characterized in that** the at least one plug-in connection (7) has a mounting direction (12) which is oriented at an angle of less than 30° to the plane of the cooling elements (2, 3, 4, 5), and/or the at least one second plug-in connection (8) has a mounting direction (13) which is oriented substantially perpendicularly to the plane of the cooling elements (2, 3, 4, 5).

3. Cooling device (1) for a motor vehicle according to at least one of the preceding claims, **characterized in that** the boundary surfaces (18) of a sleeve (15) of at least one first plug-in connection (7) have mutually facing end edges (16), the distance (D) of which from each other is greater than the spacing (A) between the boundary surfaces (18).

4. Cooling device (1) for a motor vehicle according to at least one of the preceding claims, **characterized in that** the at least one first plug-in connection (7) of the moveable bearing side (10), in its fixing position connecting the cooling elements (2, 3, 4, 5), is designed to be immovable in each case in the direction of the second spatial axis (X), which is perpendicular to the plane of the cooling elements (2, 3, 4, 5), and/or the at least one second plug-in connection (8) of the fixed bearing side (11), in its fixing position connecting the cooling elements (2, 3, 4, 5), is designed to be immovable in each case in the direction of the second spatial axis (X), which is perpendicular to the plane of the cooling elements (2, 3, 4, 5), and in the direction of the first spatial axis (Y) and third spatial axis (Z) which are parallel to the plane of the cooling elements (2, 3, 4, 5).

5. Cooling device (1) for a motor vehicle according to at least one of the preceding claims, **characterized in that** the at least one second plug-in connection (8) of the fixed bearing side (11), in its fixing position connecting the cooling elements (2, 3, 4, 5), is fixed in each case in the direction perpendicular to the plane of the cooling elements (2, 3, 4, 5) by a latching connection (21).

6. Cooling device (1) for a motor vehicle according to Claim 5, **characterized in that** the latching connection (21) consists of an undercut (19) preferably arranged on the spike (14) and of at least one latching hook (20) which engages around the undercut (19) in the fixing position and is preferably arranged on the sleeve (15).

7. Cooling device (1) for a motor vehicle according to Claim 6, **characterized in that** at least two second plug-in connections (8) are provided on the fixed bearing side (11), wherein at least two of the latching hooks (20) of the two plug-in connections (8) are oriented transversely with respect to each other.

8. Cooling device (1) for a motor vehicle according to at least one of the preceding claims, **characterized in that**, in the case of at least one second plug-in connection (8), a recess (22) for receiving an additional connecting means (23) is provided in the spike (14) and/or the sleeve (15).

## Revendications

1. Dispositif de refroidissement (1) pour un véhicule automobile, le dispositif de refroidissement (1) comprenant au moins deux éléments de refroidissement (2, 3, 4, 5) qui sont disposés dans des plans différents, notamment parallèles, les uns derrière les autres de manière à pouvoir être parcourus par l'air ambiant acheminé et qui sont connectés les uns aux autres au moyen de raccords enfichables (7, 8), au moins un premier raccord enfichable (7), lors du montage, étant réalisé de manière à pouvoir être déplacé le long d'un premier axe spatial (Y) et au moins un deuxième raccord enfichable (8) étant réalisé, lors du montage, de manière à pouvoir être déplacé le long d'un deuxième axe spatial (X) transversalement au premier axe spatial (Y) et l'au moins un des premiers raccords enfichables (7) étant réalisé de manière à pouvoir être déplacé dans une mesure limitée dans sa position de fixation reliant les éléments de refroidissement (2, 3, 4, 5) à chaque fois dans le plan parallèlement aux éléments de refroidissement (2, 3, 4, 5) dans la direction d'au moins un axe spatial (Y), l'au moins un premier raccord enfichable (7), en formant un côté de palier libre (10), étant disposé au niveau d'un premier bord, en particulier au niveau d'un premier dispositif de collecte (9) des éléments de refroidissement (2, 3, 4, 5), et l'au moins un deuxième raccord enfichable (8), en formant un côté de palier fixe (11), étant disposé au niveau d'un deuxième bord opposé au premier bord, en particulier au niveau d'un deuxième dispositif de collecte (9), **caractérisé en ce que** les raccords enfichables (7, 8) se composent d'un mandrin (14) disposé au niveau de l'un des éléments de refroidissement (2, 3, 4, 5) et d'une douille (15) recevant le mandrin (14) dans la position de fixation et lors du montage des éléments de refroidissement (2, 3, 4, 5) les uns aux autres, la douille (15) comprenant deux surfaces de limitation plan-parallèles (18) qui, dans la position de fixation, sont associées à des surfaces de glissement plan-parallèles (17) du mandrin (14), et dont la distance (A) l'une de l'autre est légèrement supérieure à l'éloignement (E) des surfaces de glissement (17), et les surfaces de limitation (18) étant disposées de manière décalée l'une de l'autre le long du premier axe spatial (Y) de telle sorte qu'une configuration de forme étagée des surfaces de limitation (18) soit obtenue.

2. Dispositif de refroidissement (1) pour un véhicule automobile selon les revendications 1, **caractérisé en ce que** l'au moins un premier raccord enfichable (7) présente une direction de montage (12) qui est orientée suivant un angle inférieur à 30° par rapport au plan des éléments de refroidissement (2, 3, 4, 5) et/ou l'au moins un deuxième raccord enfichable (8) présente une direction de montage (13) qui est orientée essentiellement perpendiculairement au plan des éléments de refroidissement (2, 3, 4, 5).

3. Dispositif de refroidissement (1) pour un véhicule automobile selon au moins l'une quelconque des revendications précédentes, **caractérisé en ce que** les surfaces de limitation (18) d'une douille (15) d'au moins un premier raccord enfichable (7) présentent des bords de terminaison (16) tournés l'un vers l'autre, dont la distance (D) l'un à l'autre est supérieure à la distance (A) entre les surfaces de limitation (18).

4. Dispositif de refroidissement (1) pour un véhicule automobile selon au moins l'une quelconque des revendications précédentes, **caractérisé en ce que** l'au moins un premier raccord enfichable (7) du côté du palier libre (10) dans sa position de fixation reliant les éléments de refroidissement (2, 3, 4, 5) est réalisé à chaque fois de manière à ne pas pouvoir être déplacé dans la direction du deuxième axe spatial (X) perpendiculaire au plan des éléments de refroidissement (2, 3, 4, 5) et/ou l'au moins un deuxième raccord enfichable (8) du côté du palier fixe (11), dans sa position de fixation reliant les éléments de refroidissement (2, 3, 4, 5) est réalisé à chaque fois de manière à ne pas pouvoir être déplacé dans la direction du deuxième axe spatial (X) perpendiculaire au plan des éléments de refroidissement (2, 3, 4, 5) et dans la direction du premier axe spatial (Y) parallèle au plan des éléments de refroidissement (2, 3, 4, 5) et du troisième axe spatial (Z).

5. Dispositif de refroidissement (1) pour un véhicule automobile selon au moins l'une quelconque des revendications précédentes, **caractérisé en ce que** l'au moins un deuxième raccord enfichable (8) du côté du palier fixe (11) est fixé dans sa position de fixation reliant les éléments de refroidissement (2, 3, 4, 5) à chaque fois dans la direction perpendiculaire au plan des éléments de refroidissement (2, 3, 4, 5) par une connexion par encliquetage (21).

6. Dispositif de refroidissement (1) pour un véhicule automobile selon la revendication 5, **caractérisé en ce que** la connexion par encliquetage (21) se compose d'une contre-dépouille (19) disposée de préférence sur le mandrin (14) et d'au moins un crochet d'encliquetage (20) venant en prise dans la position de fixation autour de la contre-dépouille (19) et disposé de préférence sur la douille (15).

7. Dispositif de refroidissement (1) pour un véhicule automobile selon la revendication 6, **caractérisé en ce qu'**au moins deux deuxièmes raccords enfichables (8) sont prévus au niveau du côté du palier fixe (11), au moins deux des crochets d'encliquetage (20) des deux raccords enfichables (8) étant orientés transversalement l'un à l'autre.

8. Dispositif de refroidissement (1) pour un véhicule automobile selon au moins l'une quelconque des revendications précédentes, **caractérisé en ce que** dans le cas d'au moins un deuxième raccord enfichable (8), un évidement (22) est prévu dans le mandrin (14) et/ou dans la douille (15) pour recevoir un moyen de connexion supplémentaire (23).
